# EUROPEAN PATENT SPECIFICATION

(11) **EP 2 421 070 B1**
(45) Date of publication and mention of the grant of the patent: **19.03.2014**
(21) Application number: 11173199.8
(22) Date of filing: 08.07.2011
(51) Int. Cl.: H01M 2/10, H01M 2/20, H01M 10/42, H01M 10/658

(54) **Battery pack**
Batteriepack
Bloc-batteries

(30) Priority: 17.08.2010 US 374563 P; 08.03.2011 US 201113042816
(43) Date of publication of application: 22.02.2012
(73) Proprietor: Samsung SDI Co., Ltd., Yongin-si, Gyeonggi-do (KR)
(72) Inventor: Park, Han-Kyu, Gyeonggi-do (KR)
(74) Representative: Walaski, Jan Filip

(56) References cited:
- EP-A1- 1 780 825
- EP-A1- 2 282 363
- EP-A2- 2 317 585
- WO-A2-2010/079938
- JP-A- 2005 317 456
- US-A- 5 926 659

## Description

The invention relates to a battery pack, in particular to a battery pack having improved durability and safety.

In general, a battery pack composed of a plurality of battery cells connected in parallel and/or in series is used for devices, such as laptops and electric vehicles. The battery cells are connected by connection tabs with adjacent battery cells. Further, the battery cells are mounted in a case.

Embodiments of the invention provide a battery pack that can protect a plurality of battery cells against vibration, shock, and being dropped, by having fixing ribs that fix the battery cells in a holder case mounted on the battery cells.

JP2005317456 discloses a battery pack that has a battery block which is provided with a plurality of batteries, lead plates that support batteries in an almost parallel state mutually by fixing end faces of the plurality of batteries, and spacers having insulating property to partition between adjoining batteries from each other.

US5926659 discloses a bracket for mounting a thermal cutoff device within an electronic device having an electronic component. The bracket includes a fastener for fastening the bracket within the electronic device, and a holder integrally formed with the fastener.

According to the present invention, there is provided a battery pack as set out in claim 1. Preferred features are set out in claims 2 to 13.

The connecting tabs may be exposed out of the holder.

The battery pack comprises first and second fixing members, each arranged to contact a surface of one of the battery cells, wherein the wire from a connecting tab is held in a space between the first and second fixing members.

Each of the first and second fixing members comprises a protrusion extending into the space between the first and second fixing members. The holder may include a guide groove for receiving the wire held by the fixing members. The guide groove may include first and second opposing protrusions for holding the wire in the guide groove.

The first and second opposing protrusions may have a uniform thickness along their length or the first and second opposing protrusions may taper along their length towards a bottom of the guide groove.

The battery pack may further comprise a guide member adjacent to the guide groove around which the wire is disposed to prevent lateral movement of the wire.

The guide member may have a body portion around a portion of which the wire is disposed, and an arm extending laterally from the body portion to prevent the wire from slipping from the body portion. The guide member may further comprise a hook at the end of the arm furthest from the body portion to retain the wire between the hook and the body portion.

Fixing members at opposite ends of the battery pack may be laterally offset from one another, effectively being arranged in a zig-zag pattern.

The holder may comprise a cover extending across the plurality of battery cells and an extension portion at opposite ends of the cover adjacent to the respective terminals of the battery cells. The fixing members and the guide groove may be on the extension portion.

The protection circuit module may be mounted to the battery holder. The holder may be disposed in an external case, further comprising an insulating sheet between the connecting tabs and the case.

The accompanying drawings, together with the specification, illustrate exemplary embodiments of the present invention, and, together with the description, serve to explain the principles of the present invention.
FIG. 1A is a front perspective view showing a holder case mounted on a plurality of battery cells according to the present invention;
FIG. 1B is a rear perspective view showing the holder case mounted on the battery cells according to the present invention;
FIG. 1C is a view schematically showing the holder case mounted and fixed to the battery cells according to the present invention;
FIG. 2 is a perspective view of the holder case according to the present invention;
FIG. 3 is a perspective view enlarging the portion A of FIG. 2;
FIG. 4A is a perspective view enlarging the portion B of FIG. 2;
FIG. 4B is a perspective view showing an alternative type of protruding rib compared to that shown in FIG. 4A;
FIG. 5A is a perspective view enlarging the portion C of FIG. 2;
FIG. 5B is a perspective view showing an alternative guide member compared to that shown in FIG. 5A;
FIG. 6 is a perspective view showing an attached insulating sheet according to the present invention; and
FIG. 7 is a perspective view showing a battery pack equipped with an external case according to the present invention.

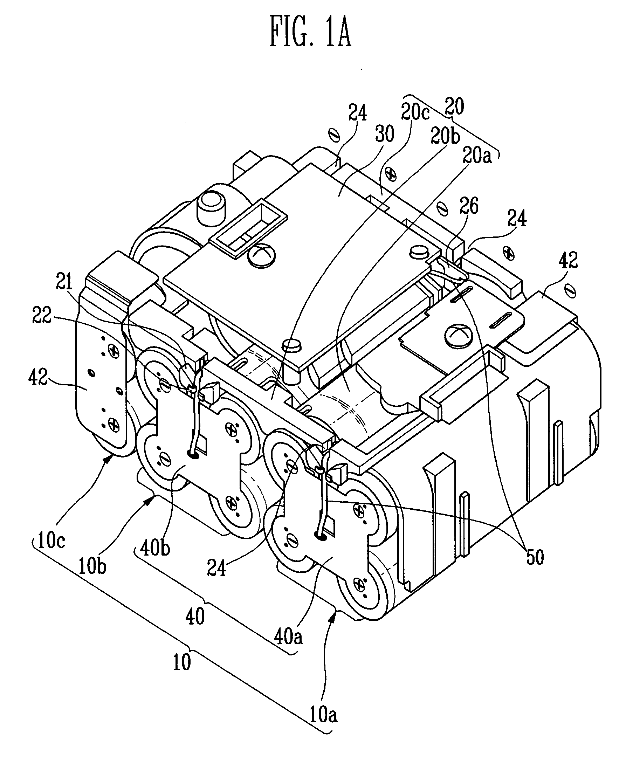

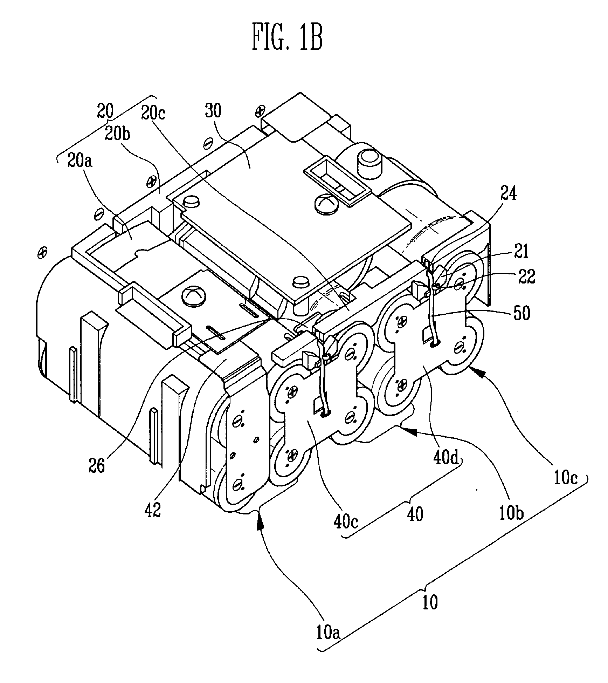

Referring to FIGS. 1A and 1B, a battery pack according to the present invention includes a plurality of battery cells 10, a holder case 20, a protection circuit module 30, a lead wire 50, and fixing ribs 21.

The battery cells 10 are, for example, rechargeable cylindrical lithium ion batteries. The battery cells 10 according to an embodiment of the present invention are arranged in a five-series and two-parallel structure (5S*2P). That is, five sets of a battery cell group which has a set of two battery cells connected in parallel are connected by connection tabs. The connection tabs 40 are conductive devices made of copper etc. and electrically connect the battery cell groups.

Hereinafter, the connection relationship of the battery cell groups is described in more detail with reference to FIG. 1A. Basically, two battery cells are connected in parallel. One end of each of the battery cells connected in parallel has a first pole and the other end has a second pole. The first poles of the battery cells are electrically connected to the protection circuit module by the connection tab 42 in FIG. 1A. The second poles of the battery cells are electrically connected with the first poles of the adjacent battery cells by the connection tab 40d in FIG. 1B. The battery cells having the second poles at the other end are electrically connected with the first poles of the next battery cells by the connection tab 40b. Therefore, in total, five groups of battery cells are connected in series and the second poles of the last battery cells are electrically connected with the protection circuit module 30 by the connection tab 42. Meanwhile, it should be understood that the five-series and two-parallel structure (5S*2P) is exemplified, but the structure is not limited thereto and various connection structures may be used, as required.

Meanwhile, the holder case 20 of the present invention may be formed to cover at least a portion of the battery cells 10. In an embodiment of the present invention, the holder case 20 includes a cover 20a that covers the outer surfaces of the battery cells 10, and a first extender 20b and a second extender 20c disposed close to both ends of the battery cells 10, in the cover 20a. The first and second extenders 20b, 20c may extend to the spaces defined between adjacent battery cell groups. That is, the ends of the first and second extenders 20b, 20c may be formed in a shape matching with the circumference of the cylindrical battery cells 10, in which it is possible to prevent the battery cells from moving due to external shock.

Further, the first and second extenders 20b, 20c have at least one or more fixing ribs 21 at both ends of the battery cells 10 to maintain and fix the position of the battery cells 10. Further, the fixing ribs 21 also have a function of guiding the lead wire 50 electrically connecting the battery cells 10 with the protection circuit module 30.

The fixing ribs 21 are formed to contact the ends of the battery cells 10 and may be formed between the battery cells 10. Referring to FIG. 1A, the fixing rib 21 may be formed on the first extender 20b at the positions corresponding to the positions of the connection tabs 40a, 40b. Referring to FIG. 1B, the fixing rib 21 may be formed on the second extender 20c at the positions corresponding to the positions of the connection tabs 40c, 40d. That is, the first extender 20b extending from the cover 20a is positioned at the ends of the battery cells 10 and the second extender 20c is positioned at the other ends of the battery cells 10, such that the fixing ribs are alternately formed at both ends of the battery cells 10, thereby firmly fixing the battery cells 10 at their positions.

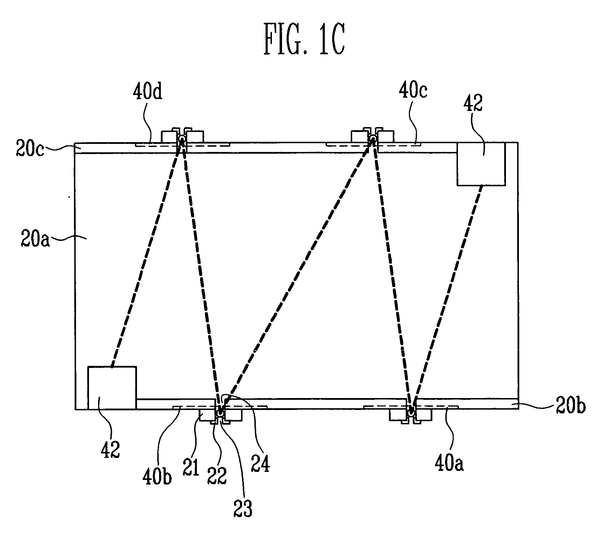

The positions where the fixing ribs 21 are formed may construct a zigzag shape, when seeing the holder case 20 from above. FIG. 1C is a plan view schematically showing the top of the holder case 20, seen from above as described above. That is, as shown in FIG. 1C, the fixing ribs 21 of the present invention may be formed on the first extender 20b and the second extender 20c while being positioned on the first, second, third, and fourth connection tabs 40a, 40b, 40c, 40d. Further, the battery cells (10 in FIG. 1A) fixed by welding with the first, second, third, and fourth connection tabs 40a, 40b, 40c, 40d are supported by the fixing ribs 21. Therefore, the fixing ribs 21 disposed in a zigzag shape prevent the battery cells (10 in FIG. 1A) from moving and also prevent the connection tabs 40 fixed to the battery cells from separating. That is, it is possible to improve durability of the battery pack against shock, drop and vibration. Meanwhile, referring to FIG. 1c, the battery cells are fixed in a zigzag shape in order not to be moved by the first, second, third, and fourth connection tabs 40a, 40b, 40c, 40d formed on the first extender 20b and the second extender 20c. Further, the lead wire (not shown) passes through the first and second extenders 20b, 20c of the holder case, through the fixing rib 21 and a lead wire-through hole 23 formed in the fixing rib 21. In this configuration, guide grooves 24 are formed on the first and second extenders 20b, 20c such that the lead wire 50 can be guided without protruding outside. This is described in detail below.

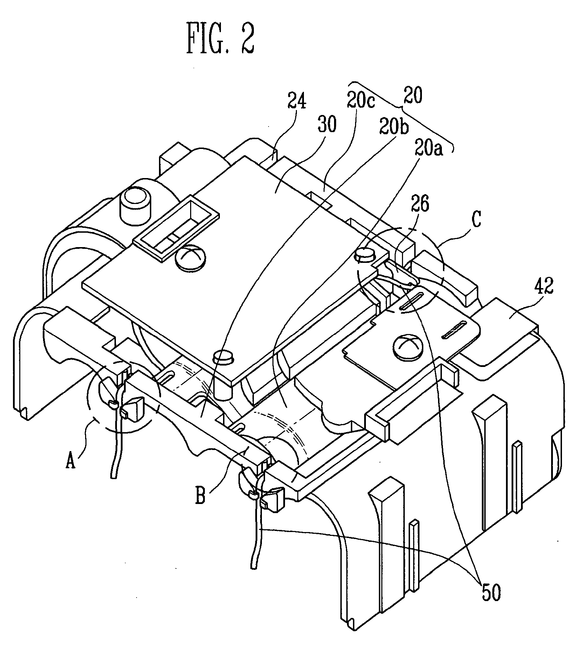

As shown in FIGS. 2 to 3, the fixing rib 21 is formed on the first extender 20b of the holder case (20, see FIG. 1) to support the connection tabs 40a, 40b, 40c, 40d positioned at the ends of the battery cells 10. The fixing rib 21 may be divided left and right with a predetermined gap therebetween and the gap may be the lead wire-through hole 23 for guiding the lead wire 50. Further, protrusions 22 may be formed to protrude from both sides facing the lead wire-through hole of the fixing rib 21. The protrusions 22 function as locking members that prevent the lead wire passing through the lead wire-through hole 23 from being pulled out.

Further, the fixing fib 21 may be formed with the smallest area contacting the lead wire 50. That is, it is possible to minimize the contact area between the lead wire 50 and the fixing rib 21 by making the middle portion of the fixing rib 21 where the lead wire-through hole 23 is formed, smaller than the side of the fixing rib 21 which contacts the connection tab 40. This is because the coating of the lead wire 50 may peels off by the fixing rib 21, when shock is applied to the battery cells due to drop etc.

Further, the guide grooves 24 through which the lead wire 50 adjacent the fixing ribs 21 can pass may be further formed on the first extender and the second extender 20b, 20c. That is, the guide grooves 24 for guiding the lead wire 50 from the first extender and the second extender 20b, 20c of the holder case 20 when connecting the lead wire 50 passing through the lead wire-through hole 23 from the battery cells 10 to the protection circuit module 30 may be further formed. Protruding ribs, or protrusions, 25, 25' fixing or supporting the lead wire 50, which passes through, may be further formed inside the guide grooves 24.

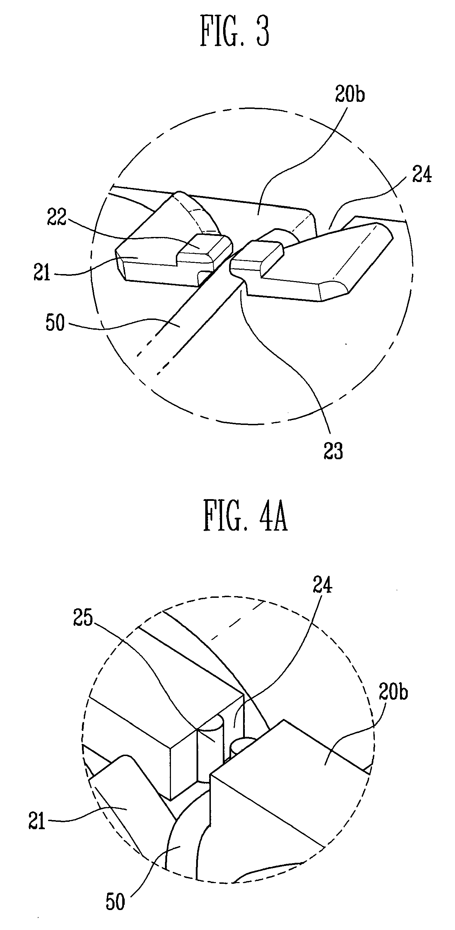

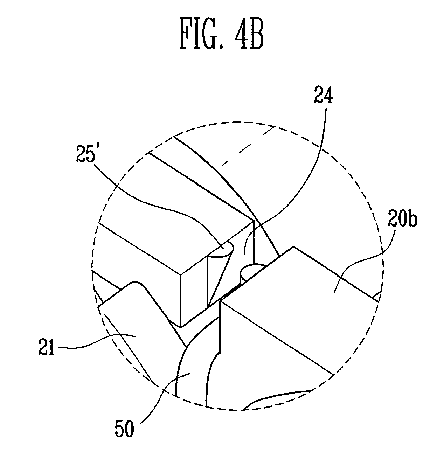

The protruding rib 25 shown in FIG. 4A may protrude at a constant thickness on both inner sides of the guide groove 24. Therefore, it is possible to the lead wire 50 inserted in the guide groove 24 from being separated outside. The protruding rib 25' shown in FIG. 4B may have a shape that decreases in thickness toward the inside of the guide groove 24. Therefore, the lead wire 50 press-fitted in the guide groove 24 can be seated inside the guide groove 25 without contacting the protruding rib 25'. That is, the lead wire 50 can move inside the protruding rib 25', but cannot be separated outside from the guide groove 24 by the protruding rib 25'. Further, though not shown, the protruding rib may protrude only at the inlet of the guide groove.

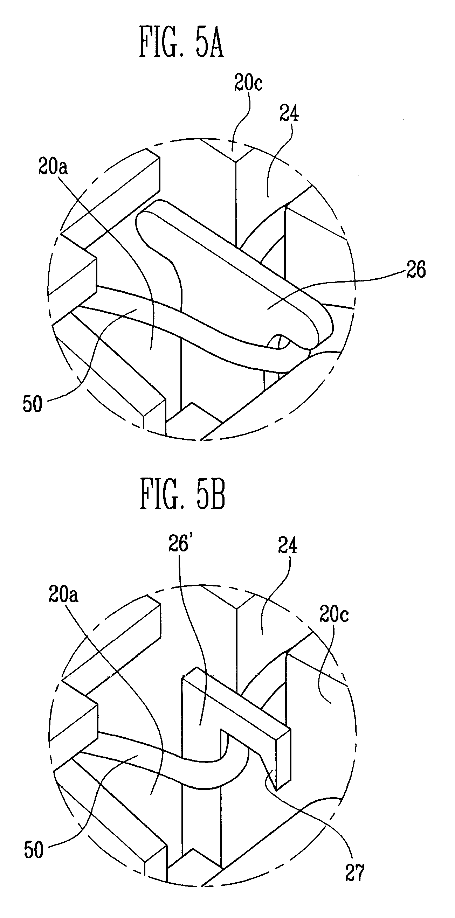

On the other hand, a guide member 26 fixing the lead wire 50 not to be horizontally move may be further formed at the cover 20a of the holder case 20. The guide members 26, 26' described above are show in detail in FIGS. 5A and 5B. First, referring to FIG. 5A, the guide member 26 that guides the lead wire 50 is further formed at the cover 20a (see FIG.1) of the holder case 20. The guide member 26 is formed in a T-shape to fix the lead wire 50 not to horizontally move. FIG. 5B is a perspective view showing a guide member different from that shown in FIG. 5A. Referring to FIG. 5B, the guide member 26' may be formed in an inverse L-shape with a hook 27 at the end. Therefore, similar to the guide member 26 of FIG. 5A, it can fix the lead wire 50 not to horizontally move while guiding the lead wire.

Further, the lead wire 50 is coated with a vinyl tube and connects the protection circuit module 30 with the battery cell 10. In this configuration, the lead wire 50 may be a monitoring lead wire that can measure cell balancing. The lead wire 50 may be connected with the connection tab 40 at one end and with the protection circuit module 30 at the other end. In this configuration, one end of the lead wire 50 may be connected with the connection tab 40 by soldering. It is possible to check whether current flows well to the battery cells 10, using the lead wire 50.

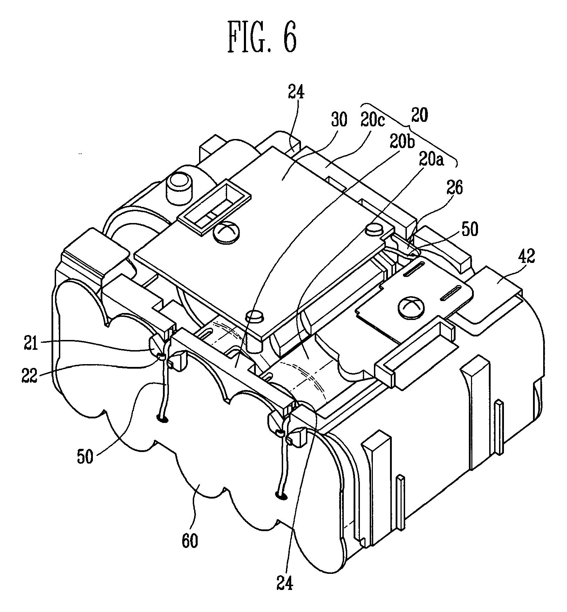

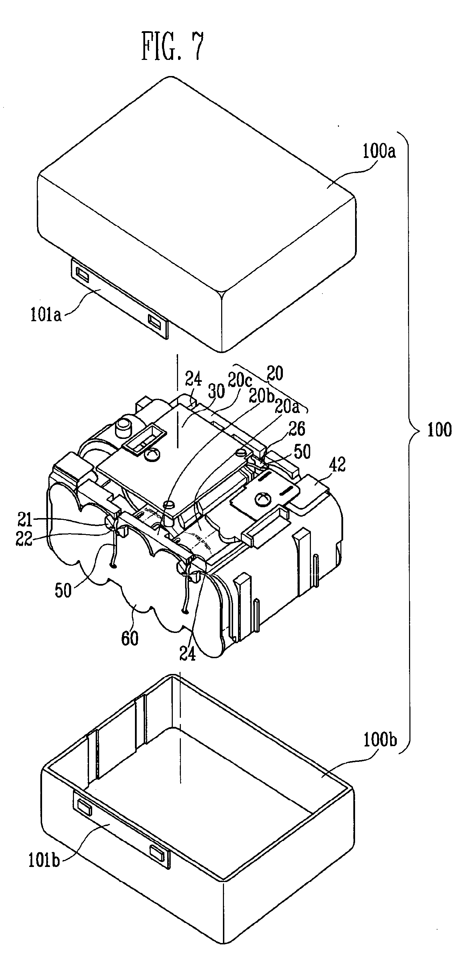

Referring to FIG. 6, the insulating sheet 60 is provided to prevent contact between the connection tab 40 (see FIG. 1) connected with the first and second poles of the battery cells 10 by welding and the external case 100 (see FIG. 7) which is the finish material. It is preferable that the insulating sheet 60 is made of a material having high thermal resistance in order to be prevented from being damaged by heat generated when current flows through the connection tab 40 or the lead wire 50.

Further, the protection module 30 may be installed at the cover 20a of the holder case 20. Electronic components are mounted on the protection circuit module 30, thereby implementing a protection circuit. The protection circuit module 30 is fixed to the holder case 20 by bolts, but may be fixed by other fasteners.

Referring to FIG. 7, an external case 100 may be further provided around the holder case 20 covering the battery cell 10. The external case 100 may be divided into a first case 100a and a second case 100b, which are fastened to each other. The first case 100a and the second case 100b may be fastened by a groove 101a and a protrusion 101b, which are formed at the cases, respectively.

Though not shown in the figures, the first case 100a and the second case 100b may be fixed by bolts or other means. Further, a groove and a protrusion for combination may be formed on the inner sides facing each other of the first case 100a and the second case 100b.

In this configuration, the inner surface of the case 100a which contacts the first extender 20b of the holder case 20 may be formed in order not to interfere with the guide groove 24. That is, it is formed such that the lead wire 50 inserted in the guide groove 24 does not directly contact the first case 100a. Therefore, it is possible to prevent the coating of the lead wire 50 from peeling off.

Although the cylindrical battery cells are used in the embodiments of the present invention, it should be noted that other shapes of battery cells may be used.

It should be understood that the present invention may be modified in various ways by those skilled in the art, without departing from the scope of the present invention as defined in the appended claims.

## Claims

1. A battery pack, comprising:
a battery holder (20);
a plurality of battery cells (10) in the battery holder;
one or more connecting tabs (40) for connecting the battery cells to one another;
a protection circuit module (30);
a wire (50) extending from each of the one or more connecting tabs (40) for connecting the tab (40) to the protection circuit module (30);
first and second fixing members (21) wherein the wire (50) from a connecting tab (40) is received and held in a space between the first and second members (21)
**characterized in that**:
the first and second fixing members (21) are each arranged to contact a surface of one of the battery cells (10) to hold them in position, and
each of the first and second fixing members (21) comprises a protrusion (22) extending into the space between the first and second members (21).

2. The battery pack of claim 1, wherein the connecting tabs are exposed out of the holder.

3. The battery pack of any one of the preceding claims, wherein the holder includes a guide groove (24) for receiving the wire held by the fixing members.

4. The battery pack of claim 3, wherein the guide groove includes first and second opposing protrusions (25, 25') for holding the wire in the guide groove.

5. The battery pack of claim 4, wherein the first and second opposing protrusions (25) have a uniform thickness along their length or wherein the first and second opposing protrusions (25') taper along their length towards a bottom of the guide groove.

6. The battery pack of any one of claims 3 to 5, further comprising a guide member (26, 26') adjacent to the guide groove around which the wire is disposed to prevent lateral movement of the wire.

7. The battery pack of claim 6, wherein the guide member has a body portion around a portion of which the wire is disposed, and an arm extending laterally from the body portion to prevent the wire from slipping from the body portion.

8. The battery pack of claim 7, further comprising a hook (27) at the end of the arm furthest from the body portion to retain the wire between the hook and the body portion.

9. The battery pack of any one of the preceding claims, wherein the fixing members at opposite ends of the battery pack are laterally offset from one another.

10. The battery pack of any one of the preceding claims, wherein the holder (20) comprises a cover (20a) extending across the plurality of battery cells and an extension portion (20b, 20c) at opposite ends of the cover adjacent to the respective terminals of the battery cells.

11. The battery pack of claim 10, when dependent on claim 3, wherein the fixing members and the guide groove are on the extension portion.

12. The battery pack of any one of the preceding claims, wherein the protection circuit module is mounted to the battery holder.

13. The battery pack of any one of the preceding claims, wherein the holder is disposed in an external case, further comprising an insulating sheet (60) between the connecting tabs and the case.

## Patentansprüche

1. Batteriepack, umfassend:
einen Batteriehalter (20);
eine Vielzahl von Batteriezellen (10) im Batteriehalter;
einen oder mehrere Verbindungsstreifen (40) zum Verbinden der Batteriezellen miteinander;
ein Schutzschaltungsmodul (30);
einen Draht (50), der sich von jedem des einen bzw. der mehreren Verbindungsstreifen (40) erstreckt, zum Verbinden des Streifens (40) mit dem Schutzschaltungsmodul (30);
erste und zweite Befestigungsglieder (21), wobei der Draht (50) von einem Verbindungsstreifen (40) in einem Raum zwischen den ersten und zweiten Gliedern (21) aufgenommen und gehalten wird.
**dadurch gekennzeichnet, dass**:
die ersten und zweiten Befestigungsglieder (21) so angeordnet sind, dass sie mit einer Fläche einer der Batteriezellen (10) in Kontakt stehen, um diese in Position zu halten, und
jedes der ersten und zweiten Befestigungsglieder (21) eine Öffnung (22) umfasst, die sich in den Raum zwischen den ersten und zweiten Gliedern (21) erstreckt.

2. Batteriepack nach Anspruch 1, wobei die Verbindungsstreifen aus dem Halter herausgestellt sind.

3. Batteriepack nach einem der vorangehenden Ansprüche, wobei der Halter eine Führungsnut (24) zum Aufnehmen des von den Befestigungsgliedern gehaltenen Drahtes beinhaltet.

4. Batteriepack nach Anspruch 3, wobei die Führungsnut erste und zweite einander gegenüberliegende Öffnungen (25, 25') zum Halten des Drahtes in der Führungsnut beinhaltet.

5. Batteriepack nach Anspruch 4, wobei die ersten und zweiten einander gegenüberliegenden Öffnungen (25) entlang ihrer Länge eine gleichmäßige Dicke aufweisen oder wobei sich die ersten und zweiten einander gegenüberliegenden Öffnungen (25') entlang ihrer Länge in Richtung eines Bodens der Führungsnut verjüngen.

6. Batteriepack nach einem der Ansprüche 3 bis 5, ferner umfassend ein Führungsglied (26, 26'), das an die Führungsnut angrenzt, um welches der Draht angeordnet ist, um eine seitliche Bewegung des Drahtes zu verhindern.

7. Batteriepack nach Anspruch 6, wobei das Führungsglied einen Körperabschnitt, um einen Abschnitt desselben der Draht angeordnet ist, und einen Arm, der sich seitlich vom Körperabschnitt erstreckt, um ein Abrutschen des Drahtes vom Körperabschnitt zu verhindern, umfasst.

8. Batteriepack nach Anspruch 7, ferner umfassend einen Haken (27) an dem vom Körperabschnitt am weitesten entfernten Ende des Armes, um den Draht zwischen dem Haken und dem Körperabschnitt zu sichern.

9. Batteriepack nach einem der vorangehenden Ansprüche, wobei die Befestigungsglieder an einander gegenüberliegenden Enden des Batteriepacks seitlich zueinander versetzt sind.

10. Batteriepack nach einem der vorangehenden Ansprüche, wobei der Halter (20) eine Abdeckung (20a), die sich durch die Vielzahl von Batteriezellen erstreckt, und einen Erweiterungsabschnitt (20b, 20c) an einander gegenüberliegenden Enden der Abdeckung, die an die jeweiligen Klemmen der Batteriezellen angrenzen, umfasst.

11. Batteriepack nach Anspruch 10, soweit rückbezogen auf Anspruch 3, wobei die Befestigungsglieder und die Führungsnut auf dem Erweiterungsabschnitt sind.

12. Batteriepack nach einem der vorangehenden Ansprüche, wobei das Schutzschaltungsmodul am Batteriehalter befestigt ist.

13. Batteriepack nach einem der vorangehenden Ansprüche, wobei der Halter in einem externen Gehäuse angeordnet ist, ferner umfassend eine Isolierfolie (60) zwischen den Verbindungsstreifen und dem Gehäuse.

## Revendications

1. Bloc-batterie, comprenant :
un support de batterie (20) ;
une pluralité d'éléments de batterie (10) dans le support de batterie ;
une ou plusieurs languettes de connexion (40) pour relier les éléments de batterie les uns aux autres ;
un module de circuit de protection (30) ;
un fil (50) s'étendant depuis chacune des languettes de connexion (40) pour relier la languette (40) au module de circuit de protection (30) ;
des premier et deuxième éléments de fixation (21), le fil (50) depuis une languette de connexion (40) étant reçu et maintenu dans un espace entre les premier et deuxième éléments (21)
**caractérisé en ce que** :
les premier et deuxième éléments de fixation (21) sont, chacun, agencés pour venir en contact avec une surface de l'un des éléments de batterie (10) pour les maintenir en position, et
chacun des premier et deuxième éléments de fixation (21) comprend une saillie (22) s'étendant dans l'espace entre les premier et deuxième éléments de fixation (21).

2. Bloc-batterie selon la revendication 1, dans lequel les languettes de connexion sont exposées hors du support.

3. Bloc-batterie selon l'une quelconque des revendications précédentes, dans lequel le support comprend une rainure de guidage (24) destinée à recevoir le fil maintenu par les éléments de fixation.

4. Bloc-batterie selon la revendication 3, dans lequel la rainure de guidage comprend des première et deuxième saillies opposées (25, 25') pour maintenir le fil dans la rainure de guidage.

5. Bloc-batterie selon la revendication 4, dans lequel les première et deuxième saillies opposées (25, 25') ont une épaisseur uniforme sur leur longueur, ou dans lequel les première et deuxième saillies opposées (25') vont en se rétrécissant sur leur longueur en direction d'un fond de la rainure de guidage.

6. Bloc-batterie selon l'une quelconque des revendications 3 à 5, comprenant, en outre, un élément de guidage (26, 26') adjacent à la rainure de guidage, autour duquel le fil est disposé afin d'empêcher un déplacement latéral du fil.

7. Bloc-batterie selon la revendication 6, dans lequel l'élément de guidage comporte une partie de corps autour d'une partie de laquelle le fil est disposé, et un bras s'étendant latéralement depuis la partie corps pour empêcher que le fil glisse de la partie corps.

8. Bloc-batterie selon la revendication 7, comprenant, en outre, un crochet (27) à l'extrémité du bras la plus éloignée de la partie de corps afin de retenir le fil entre le crochet et la partie de corps.

9. Bloc-batterie selon l'une quelconque des revendications précédentes, dans lequel les éléments de fixation aux extrémités opposées du bloc-batterie sont décalés latéralement les uns des autres.

10. Bloc-batterie selon l'une quelconque des revendications précédentes, dans lequel le support (20) comprend un couvercle (20a) s'étendant en travers de la pluralité d'éléments de batterie et une partie d'extension (20b, 20c) aux extrémités opposées du couvercle, adjacente aux bornes respectives des éléments de batterie.

11. Bloc-batterie selon la revendication 10, lorsque dépendante de la revendication 3, dans lequel les éléments de fixation et la rainure de guidage sont situés sur la partie d'extension.

12. Bloc-batterie selon l'une quelconque des revendications précédentes, dans lequel le module de circuit de protection est monté sur le support de batterie.

13. Bloc-batterie selon l'une quelconque des revendications précédentes, dans lequel le support est disposé dans un boîtier externe, comprenant, en outre, une feuille d'isolation (60) entre les languettes de connexion et le boîtier.
